# EUROPÄISCHE PATENTANMELDUNG

(11) **EP 4 391 566 A1**
(43) Veröffentlichungstag der Anmeldung: **26.06.2024**
(21) Anmeldenummer: 22215907.1
(22) Anmeldetag: 22.12.2022
(51) Int. Cl.: H04N 23/51, G03B 17/08, G08B 13/196

(54) **SCHUTZGEHÄUSE FÜR EIN ÜBERWACHUNGSKAMERASYSTEM UND ÜBERWACHUNGSKAMERASYSTEM**

(71) Anmelder: Samcon Prozessleittechnik GmbH, 35102 Lohra-Altenvers (DE)
(72) Erfinder: SEIBERT, Steffen, 35102 Altenvers Lohra (DE)
(74) Vertreter: Patentanwälte Olbricht Buchhold Keulertz

(57) **Zusammenfassung**

Die Erfindung betrifft ein Schutzgehäuse (10) für den Einsatz in explosionssicheren und druckfesten Überwachungskamerasystemen mit einer optischen Schutzkuppel (7) zur Umhüllung einer Kameralinse, wobei die optische Schutzkuppel (7) ein hochtransparentes optisches Material aufweist, und mit einem umlaufenden Befestigungsflansch (9) zum Fixieren der optischen Schutzkuppel (7). Erfindungsgemäß ist vorgesehen, dass die optische Schutzkuppel (7) des Schutzgehäuses (10) ein Polysulfon aufweist.

## Beschreibung

Die Erfindung betrifft ein Schutzgehäuse insbesondere für den Einsatz in explosionssicheren und druckfesten Überwachungskamerasystemen gemäß dem Oberbegriff von Anspruch 1 und ein Überwachungskamerasystem mit einem solchen Schutzgehäuse gemäß dem Oberbegriff von Anspruch 9.

Mit der Entwicklung von modernen digitalen Kamerasystemen, wird die optische Überwachung in verschiedenen Bereichen der Technik immer weiter verbreitet.

So finden sich heutzutage beispielsweise Überwachungskamerasysteme für die Innen- und/oder Außenüberwachung in öffentlichen oder privaten Gebäuden. In explosionsgefährdeten Bereichen, wie beispielsweise auf Bohrinseln oder im Bereich von Förderanlagen fossiler Brennstoffe kommt einem Überwachungskamerasystem eine besondere Bedeutung zu und soll insbesondere auch beim Auftreten von Störfällen weiterhin zuverlässig Bilder liefern.

Die Überwachungskamerasysteme sind häufig extremen Bedingungen ausgesetzt. So sind die Kamerasysteme bei der Außenüberwachung typischerweise rauen Umgebungsbedingungen wie z. B. Wetterbedingungen (Regen, Hagel oder Schnee) ausgesetzt. Bei Überwachungsanwendungen, insbesondere in öffentlichen Gebäuden, sind die Überwachungskamerasysteme oftmals mechanischen Beanspruchungen wie Vandalismus, Kratzern oder mechanischen Stößen ausgesetzt. Ferner können die Kamerasysteme Explosionen und damit einhergehend extremen Druck- und Temperaturzuständen ausgesetzt sein.

Um die Überwachungskamerasysteme zu schützen und die Lebensdauer der Systeme zu verlängern, sind Überwachungskamerasysteme mit einem transparenten optischen Schutzgehäuse in Form einer Schutzkuppel als Schutz vor Umweltbelastungen oder menschlichem Vandalismus aus dem Stand der Technik bekannt.

So beschreibt beispielsweise JP 2000 15681 O A eine Art Kuppelabdeckung bzw. ein Kuppelgehäuse, eine dazu korrespondierende Kuppelvideokamera und eine Vorrichtung, die eine Kuppelabdeckung bildet. Die Kuppel ist dabei aus Acrylharz mit optischer Transparenz spritzgegossen. Die Innenfläche und die Außenfläche der Kuppelabdeckung haben eine sphärische Form und sind glattpoliert. Die Mittelpunkte dieser kugelförmigen Oberflächen sind um etwa 0,5 mm versetzt.

Solche aus dem Stand der Technik bekannten optischen Schutzgehäuse bzw. Kuppeln weisen jedoch in der Regel verschiedene Mängel und Nachteile auf. Diese Unzulänglichkeiten und Nachteile hängen in der Regel damit zusammen, dass eine Kamera (einschließlich eines optischen Linsensystems bzw. einer Kameralinse) schwenkbar und/oder drehbar innerhalb der optischen Kuppel angebracht ist. Diese schwenkbare bzw. drehbare Anbringung der Kameralinse innerhalb der Kuppel gewährleistet, dass die Kameralinse beliebig ausgerichtet werden kann, um Bilder mit beliebigen Raumwinkeln zu erfassen. Entweder manuell oder beispielsweise mit Hilfe eines Schwenkmotors kann die Kamera entsprechend ausgerichtet werden.

Üblicherweise werden bei den bekannten optischen Kuppeln neben Acrylharz oftmals Werkstoffe bzw. Polymere wie Polycarbonat als transparente Materialien für die transparenten optischen Kuppeln verwendet. Dies ist insbesondere darauf zurückzuführen, dass Polycarbonat relativ einfach beispielsweise mittels Spritzgießverfahren zu verarbeiten ist.

Um gleichzeitig hohen mechanischen Anforderungen gerecht zu werden, weisen die Polycarbonat-Kuppeln dabei materialbedingt eine relativ große Wandstärke von beispielsweise 5 mm oder mehr auf. Diese somit relativ dick ausgebildeten Polycarbonat-Kuppeln verursachen, insbesondere wenn die Kamera durch die transparente Kuppel mit hohem Weitwinkel bzw. nahezu parallelen Strahlengang arbeitet, Bildstörungen in den von der Kamera aufgenommenen Bildern. So wird die Bildqualität des von der Kamera aufgenommenen Bildes stark durch die Wellenlänge und die Wandstärke der optischen Kuppel beeinflusst. Dabei ist eine Bildverzerrung, die von Wandstärke der optischen Kuppel, der Wellenlänge und dem Winkel der optischen Achse abhängig ist, unvermeidlich. Eine derartige Bildverzerrung sollte aber möglichst gering ausfallen.

Ziel der Erfindung ist es, die genannten und weitere Nachteile des Standes der Technik zu überwinden und ein verbessertes Überwachungssystem bzw. eine verbesserte optische Schutzkuppel mit geringer Bildverzerrung zu schaffen, die insbesondere explosions- und druckfest ist.

Hauptmerkmale der Erfindung sind im kennzeichnenden Teil von Anspruch 1 angegeben. Ausgestaltungen sind Gegenstand der Ansprüche 2 bis 9.

Bei einem Schutzgehäuse für den Einsatz in explosionssicheren und druckfesten Überwachungskamerasystemen mit einer optischen Schutzkuppel zur Umhüllung einer Kameralinse, wobei die optische Schutzkuppel ein hochtransparentes optisches Material aufweist, und mit einem umlaufenden Befestigungsflansch zum Fixieren der optischen Schutzkuppel, ist erfindungsgemäß vorgesehen, dass die optische Schutzkuppel des Schutzgehäuses ein Polysulfon aufweist.

Polysulfon mit dem technischen Kürzel PSU und der chemischen Benennung Poly(oxy-1,4-phenylensulfonyl-1,4-phenylenoxy-1,4-phenylenisopropyliden-1,4-phenylen) ist ein amorpher, thermoplastischer Kunststoff. Polysulfon ist transparent (gelblich) und gehört zur Gruppe der Polyarylsulfone, zu denen auch Polyethersulfon (PES) und Polyphenylensulfon (PPSU) zählen. PSU ist das polymere Kondensationsprodukt aus 4,4'-Dichlordiphenylsulfon und 4,4'-Isopropylidendiphenol. Letzteres ist auch Grundchemikalie für viele andere Polymere, wie Polyetherketone, Polycarbonate und Epoxidharze.

Die optische Schutzkuppel kann dabei insbesondere im Wesentlichen aus Polysulfon hergestellt sein oder auch vollständig aus Polysulfon bestehen.

Der erfindungsgemäße Werkstoffeinsatz von Polysulfon anstelle von beispielsweise Polycarbonat für die optische Schutzkuppel erweist sich als besonders geeignet.

So erweist sich der Einsatz von Polysulfon insbesondere im Hinblick auf Temperatureinflüsse, Druckeinflüsse, Transparenzeigenschaften, Strahlungseinflüsse sowie im Hinblick auf die erreichbare Bildqualität als besonders vorteilhaft. Gleichzeitig ist Polysulfon resistent gegen viele chemische Stoffe, so dass das Überwachungskamerasystem weitestgehend vor chemischen Einflüssen durch aggressive Medien geschützt wird.

Durch die Verwendung von Polysulfon weist die optische Schutzkuppel beispielsweise eine Kältestabilität bis -60 °C bei einer Aussetzungsdauer von vier Wochen auf. Gleichzeitig wird eine Hitzestabilität bis 180 °C bei einer Aussetzungsdauer von vier Wochen erreicht.

Des Weiteren hält die optische Schutzkuppel auch bei vergleichsweise geringer Wandstärke aufgrund der erfindungsgemäßen Werkstoffauswahl einem Explosionsdruck bzw. einer Druckbelastung bis zu 40 bar und einem Flammendurchschlag bei einer Hochdruckexplosion stand.

Bevorzugterweise kann die optische Schutzkuppel dabei eine Wandstärke von 2 mm bis 4 mm, insbesondere von 3 mm, aufweisen. Polysulfon weist im direkten Vergleich zu Polycarbonat bessere mechanische Festigkeitswerte auf und ist grundsätzlich robuster, belastbarer und steifer als Polycarbonat. Mithin kann die Wandstärke der optischen Schutzkuppel gegenüber einer optischen Schutzkuppel aus Polycarbonat um ca. 3/5 reduziert werden. Um gleiche Zug- und Druckfestigkeitswerte zu erreichen wie beispielsweise die 5 mm starke Kuppel aus Polycarbonat, genügt die Ausbildung einer Kuppel aus Polysulfon mit einer Wandstärke von 3 mm. Die Reduzierung der Wandstärke wirkt sich zudem positiv auf die optischen Eigenschaften der Schutzkuppel und auf die daraus resultierende Bildqualität aus. Weiter wird der sogenannte "Brennlupeneffekt" reduziert, insbesondere bei telewinkligen bzw. parallelem Strahlengang.

Durch die Werkstoffauswahl erreicht die optische Schutzkuppel außerdem eine sehr hohe Transparenz bzw. Lichttransmissionswerte von größer 90 % bei gleichzeitig minimaler Lichtbrechung. Hierdurch wird wiederum vorteilhafterweise eine sehr gute optische Bildqualität erzielt und gleichzeitig einem unerwünschten "Orangenhauteffekt" entgegengewirkt. Insgesamt sind im HD-Sichtbereich der Kamera dadurch mehr als 40-fache optische Zoomfunktionen bei fast parallelem Strahlengang umsetzbar.

Darüber hinaus ist die optische Schutzkuppel hydrolysefest bei einer relativen Feuchtigkeit von 95 % und einer Temperatur von 95 °C. Die optische Schutzkuppel ist zudem stabil gegenüber Wasserdampfeinflüssen sowie Einflüssen durch Öle und Schmiermittel, Einflüsse durch hydraulische Fluide, Alkoholeinflüsse und Säureeinflüsse.

In der Gesamtbetrachtung eignet sich die erfindungsgemäße optische Schutzkuppel aus Polysulfon aufgrund der genannten vorteilhaften Effekte insbesondere für den Einsatz bei Überwachungssystemen, die explosions- und druckfest sein sollen.

Nach einer bevorzugten Ausführungsform sieht die Erfindung vor, dass die optische Schutzkuppel eine Schutzbeschichtung aufweist, wobei die Schutzbeschichtung insbesondere eine thermisch ausgehärtete, abriebfeste und witterungsbeständige Silikon-Kratzfestbeschichtung ist. Dabei kann die Schutzbeschichtung beispielsweise durch die Kratzfestbeschichtung "MOMENTIVE AS4700" gebildet sein. Hierdurch wird vor allem die Polysulfon Schutzkuppel vor den Auswirkungen von rauen Umgebungselementen und Ultraviolettstrahlung geschützt. Diese Maßnahme hat gleichzeitig einen positiven Effekt auf die Bildqualität der Aufnahme.

In einer weiteren bevorzugten Ausführungsvariante kann die optische Schutzkuppel einen konischen Abschnitt aufweisen, der sich entlang einer Hochrichtung des Schutzgehäuses erstreckt. Dabei geht der konische Abschnitt vorzugsweise in einen sphärischen Abschnitt über, wobei der konische Abschnitt der optischen Schutzkuppel zwischen dem umlaufenden Befestigungsflansch und dem sphärischen Abschnitt angeordnet ist. Dadurch wird die Lichtbrechung zusätzlich reduziert und auch bei horizontalen Aufnahmewinkeln wird eine gute Bildqualität erreicht, weil der konische Abschnitt weniger gekrümmt ist als der sphärische Abschnitt.

Um die Fertigungs- und Materialkosten sowie den Produktionsaufwand zu reduzieren, sind der Befestigungsflansch und die optische Schutzkuppel vorzugsweise einstückig ausgebildet, wobei der Befestigungsflansch und die optische Schutzkuppel insbesondere durch ein Spritzgießverfahren gefertigt sind.

Gemäß einer weiteren bevorzugten Ausführungsform weist die optische Schutzkuppel eine Außenfläche und eine Innenfläche auf, wobei die Außen- und Innenflächen der optischen Schutzkuppel durch Drehverfahren geglättet sind. Diese Maßnahme hat einen positiven Effekt auf die Bildqualität und Lichtbrechung. Dadurch können vorteilhafterweise Rauigkeiten an der optischen Schutzkuppel von weit unter 80 Angstrom erzielt werden.

Vorzugsweise ist an dem umlaufenden Befestigungsflansch eine Verstärkungslippe ausgebildet, wobei die Verstärkungslippe in Hochrichtung der optischen Schutzkuppel ragt. Die Verstärkungslippe und der umlaufende Befestigungsflansch müssen keine optischen Qualitätsanforderungen erfüllen und erleichtern vorteilhafterweise die Montage bzw. Bauteiladaption der optischen Schutzkuppel an einer geeigneten, korrespondierenden Fixierstelle.

Um den Befestigungsflansch zusätzlich zu verstärken und die mechanische Festigkeit im Bereich der Fixierung zu steigern, weist die Verstärkungslippe des Befestigungsflansches vorzugsweise eine größere Wandstärke auf als die optische Schutzkuppel.

Vorteilhafterweise verhindert der Materialüberschuss im Bereich der Verstärkungslippe, dass sich die Kuppel unter Druckeinflüssen löst. Die genaue konstruktive Ausgestaltung der Verstärkungslippe kann dabei je nach Anwendungsfall variieren. Denkbar sind neben abgerundeten Ausgestaltungen beispielsweise auch eckige Ausführungsformen der Verstärkungslippe.

Bevorzugterweise weist der Befestigungsflansch eine Stirnfläche auf, die plan ausgebildet ist. Hierdurch entsteht eine geeignete, plane Auflagefläche zum Ansetzen der Schutzkuppel bei der Bauteiladaption bzw. Montage, so dass die optische Schutzkuppel leichter angesetzt und vorjustiert werden kann.

Gemäß einer weiteren bevorzugten Ausführungsvariante, weist der Befestigungsflansch eine Anlaufschräge auf, wobei die Anlaufschräge zwischen der Stirnfläche des Befestigungsflansches und dem konischen Abschnitt der optischen Schutzkuppel angeordnet ist. Die schräge Fläche erleichtert zusätzlich die Bauteiladaption an geeigneten, korrespondierenden Gegenelementen und sorgt für ein leichteres Ansetzen der optischen Schutzkuppel.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1.: eine Schrägansicht eines erfindungsgemäßen Schutzgehäuses in demontierter Stellung;
- Fig. 2a: eine Vorderansicht des erfindungsgemäßen Schutzgehäuses von Fig. 1;
- Fig. 2b: eine Draufsicht des erfindungsgemäßen Schutzgehäuses von Fig. 1;
- Fig. 2c: eine Querschnittsdarstellung des erfindungsgemäßen Schutzgehäuses von Fig. 1.

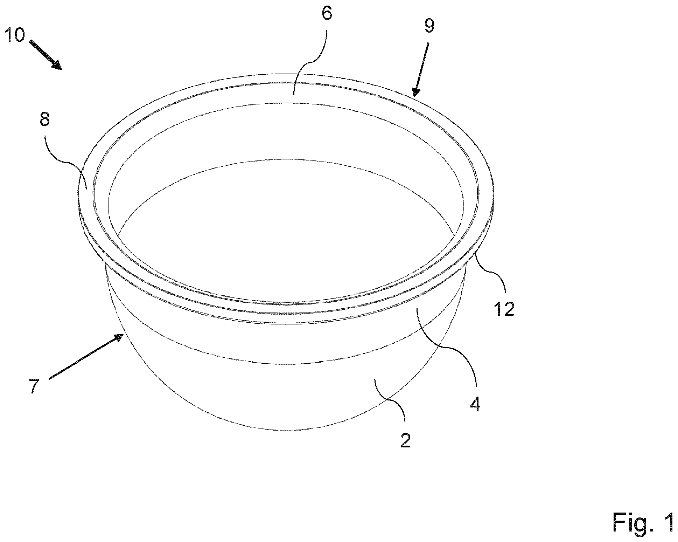

Das in Fig. 1 allgemein mit 10 bezeichnete Schutzgehäuse für den Einsatz in explosionssicheren und druckfesten Überwachungskamerasystemen umfasst eine optische Schutzkuppel 7 zur Umhüllung einer (nicht dargestellten) Kamera bzw. Kameralinse.

Die optische Schutzkuppel 7 weist ein hochtransparentes optisches Material auf und ist mit einem umlaufenden Befestigungsflansch 9 zum Fixieren der optischen Schutzkuppel 7 versehen. Die optische Schutzkuppel 7 weist weiter einen zum Befestigungsflansch 9 benachbarten konischen Abschnitt 4 auf, der sich entlang einer Hochrichtung X des Schutzgehäuses 10 erstreckt. Der konische Abschnitt 4 geht dabei in einen sphärischen Abschnitt 2 über, so dass der konische Abschnitt 4 der optischen Schutzkuppel 7 zwischen dem umlaufenden Befestigungsflansch 9 und dem sphärischen Abschnitt 2 angeordnet ist.

Die dargestellte optische Schutzkuppel 7 bzw. das Schutzgehäuse 10 umfasst ein Polysulfon Werkstoff und ist zusätzlich mit einer thermisch ausgehärteten, abriebfesten und witterungsbeständigen Silikon-Kratzfestbeschichtung beschichtet. Die optische Schutzkuppel 7 aus Polysulfon weist in diesem Beispiel eine Wandstärke von 3 mm auf. Der Befestigungsflansch 9 und die optische Schutzkuppel 7 sind einstückig ausgebildet, wobei der Befestigungsflansch 9 und die optische Schutzkuppel 7 durch ein Spritzgießverfahren gefertigt sind.

Wie man ferner anhand von Fig. 1 erkennt, weist der Befestigungsflansch 9 eine Stirnfläche 8 auf, wobei die Stirnfläche 8 plan ausgebildet ist. Benachbart zu der planen Stirnfläche 8, weist der Befestigungsflansch 9 eine Anlaufschräge 6 auf, wobei die Anlaufschräge 6 zwischen der Stirnfläche 8 des Befestigungsflansches 9 und dem konischen Abschnitt 4 der optischen Schutzkuppel 7 angeordnet ist. Dabei ragt die Anlaufschräge 6 in einen Innenbereich der optischen Schutzkuppel 7.

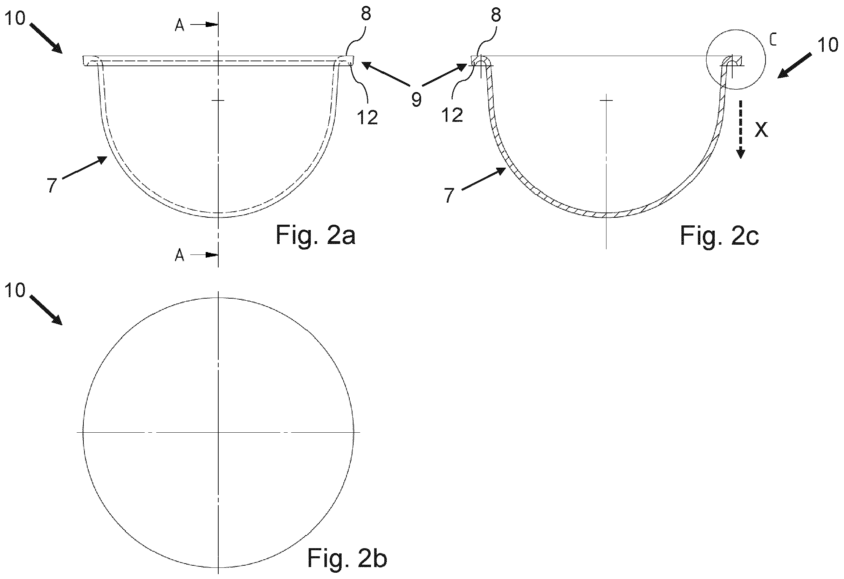

Aus Fig. 2a bis 2c wird ersichtlich, dass die optische Schutzkuppel 7 eine Außenfläche und eine Innenfläche aufweist, wobei die Außen- und Innenflächen der optischen Schutzkuppel 7 durch Drehverfahren geglättet sind. An dem umlaufenden Befestigungsflansch 9 ist zudem eine Verstärkungslippe 12 ausgebildet, wobei die Verstärkungslippe 12 in Hochrichtung X der optischen Schutzkuppel 7 ragt. Insbesondere anhand der Querschnittsdarstellung in Fig. 2c erkennt man, dass die Verstärkungslippe 12 des Befestigungsflansches 9 eine größere Wandstärke aufweist, als die optische Schutzkuppel 7.

Die Erfindung ist nicht auf eine der vorbeschriebenen Ausführungsformen beschränkt, sondern in vielfältiger Weise abwandelbar. Das erfindungsgemäße Schutzgehäuse kann allgemein zur Abdeckung bzw. zum Schutz von Kameralinsen verwendet werden. Insbesondere soll das Schutzgehäuse explosions- und drucksichere Überwachungskamerasysteme schaffen und bei Kameralinsen, die Explosionen und extremen Umweltbedingungen sowie Einflüssen ausgesetzt sind, zum Einsatz kommen.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- X: Hochrichtung Schutzgehäuse

- 2: Sphärischer Abschnitt
- 4: Konischer Abschnitt
- 6: Anlaufschräge
- 7: Optische Schutzkuppel
- 8: Stirnfläche
- 9: Befestigungsflansch
- 10: Schutzgehäuse
- 12: Verstärkungslippe

## Patentansprüche

1. **Schutzgehäuse (10)** für den Einsatz in explosionssicheren und druckfesten Überwachungskamerasystemen mit einer optischen Schutzkuppel (7) zur Umhüllung einer Kameralinse, wobei die optische Schutzkuppel (7) ein hochtransparentes optisches Material aufweist, und mit einem umlaufenden Befestigungsflansch (9) zum Fixieren der optischen Schutzkuppel (7), **dadurch gekennzeichnet, dass** die optische Schutzkuppel (7) des Schutzgehäuses (10) ein Polysulfon aufweist.

2. Schutzgehäuse nach Anspruch 1, **dadurch gekennzeichnet, dass** die optische Schutzkuppel (7) eine Wandstärke von 2 mm bis 4 mm, insbesondere von 3 mm, aufweist.

3. Schutzgehäuse nach Anspruch 1 oder 2, **dadurch gekennzeichnet, dass** die optische Schutzkuppel (7) eine Schutzbeschichtung aufweist, wobei die Schutzbeschichtung insbesondere eine thermisch ausgehärtete, abriebfeste und witterungsbeständige Silikon-Kratzfestbeschichtung ist.

4. Schutzgehäuse nach Anspruch 3, **dadurch gekennzeichnet, dass** die Schutzbeschichtung aus Momentive AS4700 gebildet ist.

5. Schutzgehäuse nach einem der vorhergehenden Ansprüche, **dadurch gekennzeichnet, dass** der umlaufende Befestigungsflansch (9) und die optische Schutzkuppel (7) einstückig ausgebildet sind, wobei der Befestigungsflansch (9) und die optische Schutzkuppel (7) durch ein Spritzgießverfahren gefertigt sind.

6. Schutzgehäuse nach einem der vorhergehenden Ansprüche, **dadurch gekennzeichnet, dass** die optische Schutzkuppel (7) eine Außenfläche und eine Innenfläche aufweist, wobei die Außen- und Innenflächen der optischen Schutzkuppel (7) durch Drehverfahren geglättet sind.

7. Schutzgehäuse nach einem der vorhergehenden Ansprüche, **dadurch gekennzeichnet, dass** an dem umlaufenden Befestigungsflansch (9) eine Verstärkungslippe (12) ausgebildet ist, wobei die Verstärkungslippe (12) in Hochrichtung (X) der optischen Schutzkuppel (7) ragt.

8. Schutzgehäuse nach Anspruch 7, **dadurch gekennzeichnet, dass** die Verstärkungslippe (12) des Befestigungsflansches (9) eine größere Wandstärke aufweist, als die optische Schutzkuppel (7).

9. Schutzgehäuse nach einem der vorhergehenden Ansprüche, **dadurch gekennzeichnet, dass** der Befestigungsflansch (9) eine Anlaufschräge (6) aufweist.

10. **Überwachungskamerasystem** mit einem Schutzgehäuse nach einem der vorhergehenden Ansprüche, **dadurch gekennzeichnet, dass** das Überwachungskamerasystem wenigstens eine Kameralinse umfasst, die Dreh- und/oder schwenkbar gelagert ist, wobei die Kameralinse von einer optischen Schutzkuppel (7) umhüllend geschützt ist.
